# EUROPÄISCHE PATENTSCHRIFT

(11) **EP 0 879 162 B1**
(45) Veröffentlichungstag und Bekanntmachung des Hinweises auf die Patenterteilung: **10.09.2003**
(21) Anmeldenummer: 97901583.1
(22) Anmeldetag: 22.01.1997
(51) Int. Cl.: B60T 7/06

(54) **BREMSPEDALWERK FÜR KRAFTFAHRZEUGE**
BRAKE PEDAL MECHANISM FOR MOTOR VEHICLES
MECANISME DE PEDALE DE FREIN POUR VEHICULE A MOTEUR

(30) Priorität: 22.02.1996 DE 19606427
(43) Veröffentlichungstag der Anmeldung: 25.11.1998
(73) Patentinhaber: Continental Teves AG & Co. oHG, 60488 Frankfurt (DE)
(72) Erfinder: SCHONLAU, Jürgen, D-65396 Darmstadt (DE); HARTH, Ralf, D-64297 Darmstadt (DE); RITTER, Wolfgang, D-61440 Oberursel (DE)
(74) Vertreter: Portwich, Peter
(86) Internationale Anmeldenummer: EP9700286
(87) Internationale Veröffentlichungsnummer: WO97030876

## Beschreibung

Die Erfindung betrifft ein Bremspedalwerk für Kraftfahrzeuge mit einem Pedalbock, der an einem Bremskraftverstärker oder einer Karosseriewand des Kraftfahrzeuges befestigbar ist und der zwei gegenüberliegende Seitenwände aufweist, die Lagerstellen für eine Schwenkachse eines drehbar gelagerten Betätigungspedals bilden, an dem eine Betätigungsstange des Bremskraftverstärkers angelenkt ist, wobei an dem dem Bremskraftverstärker bzw. der Karosseriewand abgewandten Ende des Pedalbocks weitere Befestigungsmittel für dessen Verbinden mit einem weiteren stationären Karosseriebauteil vorgesehen sind.

Ein derartiges Pedalwerk ist z. B. aus der DE 43 44 386 A1 bekannt. Bei einem Aufprallunfall wird der Pedalbock des vorbekannten Pedalwerks auf Grund seiner besonderen Formgebung derart gestaucht, daß die Pedalschwenkachse freigegeben wird und das Betätigungspedal um den Anlenkpunkt der Betätigungsstange in Richtung auf die Karosseriewand zu weggeschwenkt werden kann.

Als nachteilig anzusehen ist bei dem vorbekannten System die Tatsache, daß bei einem Crash nicht gewährleistet werden kann, daß beide Achslagerungen gleichzeitig und gleichmäßig freigegeben werden, so daß ein seitliches Wegdrehen des Betätigungspedals und somit die Gefahr einer Fußverletzung durch Verformungen der Karosseriewand nicht vollständig eliminiert werden können.

Es ist daher Aufgabe der vorligenden Erfindung ein Bremspedalwerk der eingangs genannten Gattung mit optimalem Crashverhalten anzugeben, bei dem ein seitliches Wegdrehen des Betätigungspedals und somit die Gefahr einer Fußverletzung weitgehend unterbunden werden.

Diese Aufgabe wird erfindungsgemäß dadurch gelöst, daß die Lagerstellen für die Schwenkachse durch kulissenartige Führungen gebildet sind, in denen die Schwenkachse mittels eines Halteteiles gehalten wird, dessen Verschieben durch die Einwirkung einer bei einem Aufprallunfall entstehenden Kraft die Schwenkachse freigibt.

Vorteilhafte Weiterbildungen des Erfindungsgegenstandes sind in den Unteransprüchen 2 bis 7 aufgeführt.

Weitere Einzelheiten, Merkmale und Vorteile der Erfindung gehen aus der nachfolgenden Beschreibung eines Ausführungsbeispiels unter Bezugnahme auf die beiliegende Zeichnung hervor, in der für einander entsprechende Einzelteile gleiche Bezugszeichen verwendet werden. In der Zeichnung zeigt:
- Fig. 1: eine Baugruppe zur Betätigung einer hydraulischen Bremsanlage, mit einem erfindungsgemäßen, im Schnitt entlang der Schnittlinie A-A in Fig. 3 gezeigten Pedalwerk in einer inaktiven Ruhestellung;
- Fig. 2: die Baugruppe nach Fig. 1 nach einem Aufprallunfall; und
- Fig. 3: das in Fig. 1 und 2 im Schnitt "A-A" dargestellte Pedalwerk in perspektivischer vereinfachter Darstellung.

Die in der Zeichnung gezeigte Baugruppe zur Betätigung einer hydraulischen Bremsanlage für Kraftfahrzeuge besteht aus einem pneumatischen Bremskraftverstärker 1, einem dem Bremskraftverstärker 1 nachgeschalteten Hauptbremszylinder 2, einem auf dem Hauptbremszylinder 2 angeordneten Druckmittelvorratsbehälter 3 sowie einem dem Bremskraftverstärker 1 vorgeschalteten Pedalwerk, das das Bezugszeichen 4 trägt. Das Gehäuse 20 des Bremskraftverstärkers 1 ist mit nicht dargestellten Befestigungsmitteln versehen, die eine Befestigung des Bremskraftverstärkers 1 sowie des Pedalwerks 4 an einer Karosseriewand 17 des Fahrzeuges ermöglichen. Das Pedalwerk 4 weist einen vorzugsweise als ein U-Profil ausgebildeten Pedalbock 5 auf, in dem ein Betätigungs- bzw. Bremspedal 6 zur Betätigung des pneumatischen Bremskraftverstärkers 1 auf einer Schwenkachse 7 drehbar gelagert ist. Denkbar ist selbstverständlich auch eine Ausführung, bei der auf der Schwenkachse 7 ein zweites Pedal, vorzugsweise ein Kupplungspedal, schwenkbar gelagert ist. Ein drittes Pedal, beispielsweise ein Gaspedal, kann seitlich am Pedalbock 5 angebracht werden. Die Betätigung des Bremskraftverstärkers 1 erfolgt dabei durch eine am Betätigungspedal 6 angelenkte Kolbenstange 10.

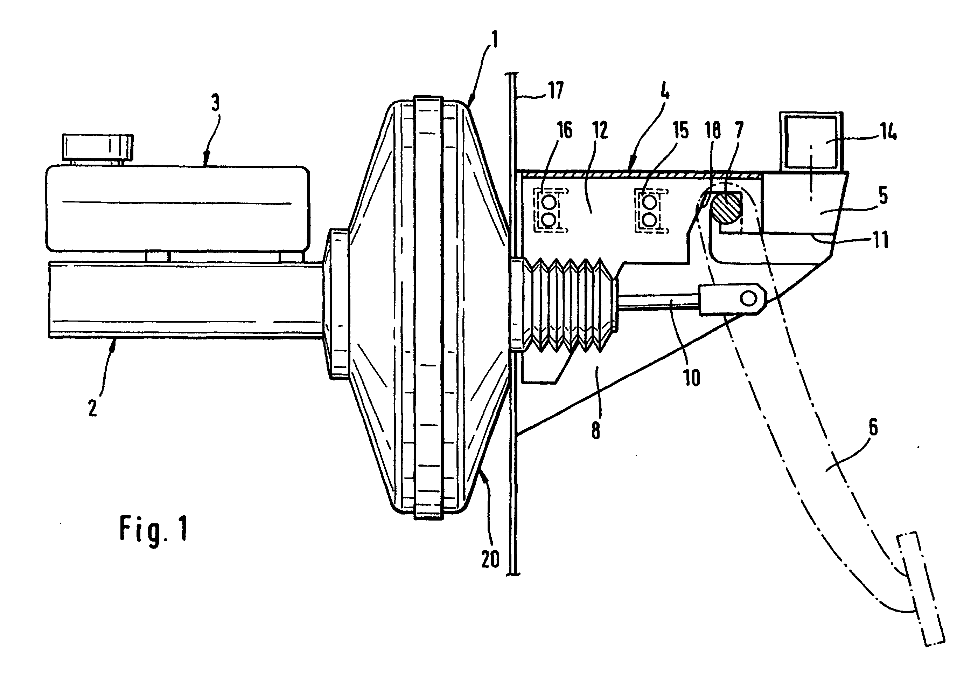

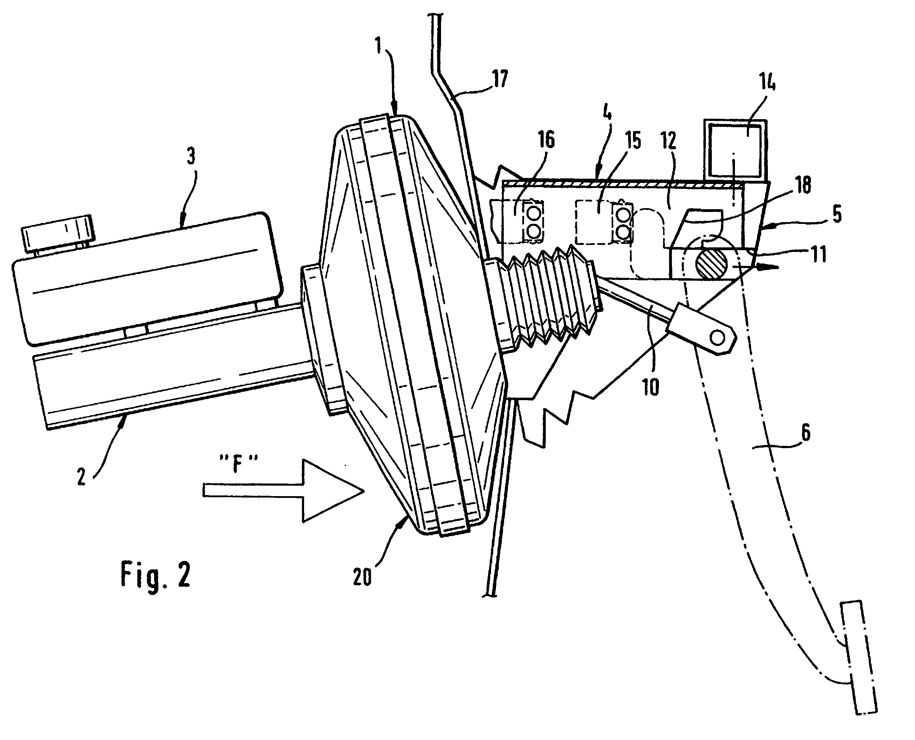

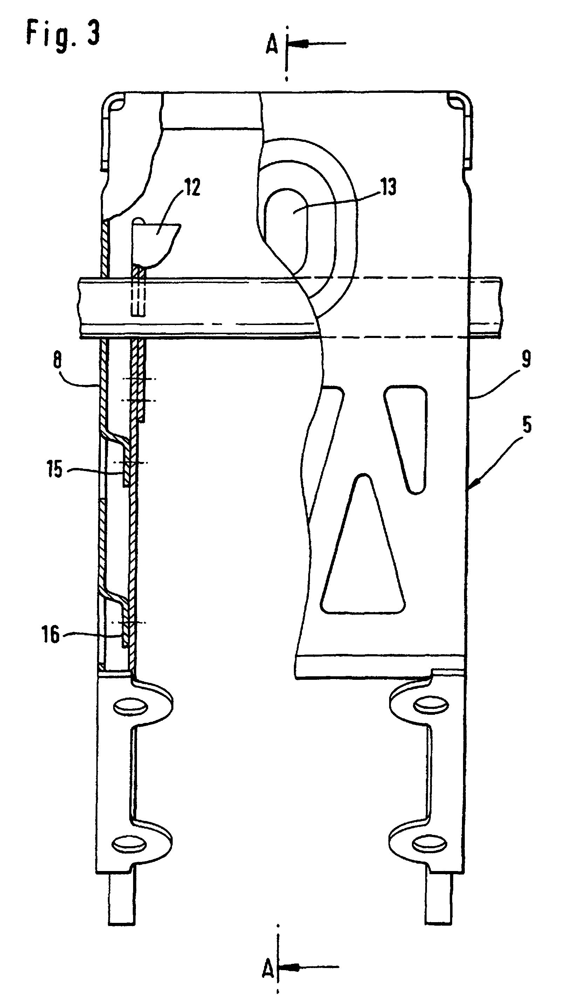

Wie insbesondere Fig. 3 zu entnehmen ist, ist der Pedalbock 5 im wesentlichen durch zwei gegenüberliegende Seitenwände 8, 9 gebildet, in deren kulissenartigen Führungen 11,- (Fig.1, 2) die Schwenkachse 7 gelagert ist und mittels eines Halteteiles 12 gehalten wird. In dem der Lagerung der Schwenkachse 7 benachbarten Bereich ist im Pedalbock 5 eine Öffnung 13 vorgesehen, die der Verbindung des Pedalbocks 5 mit einem weiteren stationären Karosserie-Bauteil, beispielsweise einem mit dem Bezugszeichen 14 versehenen Querträger, dient. Das Halteteil 12 ist dabei vorzugsweise durch ein stabiles bzw. im Vergleich mit dem Pedalbock steifes U-Profil gebildet, das mit an den Seitenwänden 8, 9 ausgebildeten Laschen 15, 16 verschweißt ist.

Bei einem Aufprallunfall, bei dem eine in Richtung des Pfeiles "F" (Fig. 2) auf die Baugruppe einwirkende Kraft entsteht, werden sowohl die die Baugruppe tragende Karosseriewand 17 als auch der dem Bremskraftverstärker 1 zugeordnete vordere Bereich des Pedalbocks 5 verformt, während sein hinterer Befestigungspunkt 13, 14 nicht oder zeitlich verzögert verformt wird. Das bezüglich des Crashverhaltens verhältnismäßig stabil ausgeführte Halteteil 12 wird bei gleichzeitigem "Aufreißen" der Laschen 15, 16 durch die Deformation des Pedalbockes 5 nach hinten verschoben und gibt dadurch die Schwenkachse 7 in der Kulissenführung 11 frei. Eine am Halteteil 12 ausgebildete Schräge 18 drückt dabei die Schwenkachse 7 gezielt aus der Lagerung nach unten. Es ist auch denkbar, durch eine besondere Ausgestaltung der Laschen 15, 16 ein definiertes Kraft-Weg-Verhältnis des Bremspedals 6 beim Crash zu erzeugen, das den sog. "Prellschlag" am Fuß verhindert. Zu diesem Zweck sind die Seitenwände 8, 9 des Pedalbockes 5 mit nicht gezeigten Sollbruchstellen versehen, die ein definiertes "Aufreißen" der Laschen 15,16 erlauben.

## Patentansprüche

1. Bremspedalwerk für Kraftfahrzeuge mit einem Pedalbock (4), der an einem Bremskraftverstärker (1) oder einer Karosseriewand (17) des Kraftfahrzeuges befestigbar ist und der zwei gegenüberliegende Seitenwände (8,9) aufweist, die Lagerstellen für eine Schwenkachse eines drehbar gelagerten Betätigungspedals (6) bilden, an dem eine Betätigungsstange (10) des Bremskraftverstärkers angelenkt ist, wobei an dem dem Bremskraftverstärker (1) bzw. der Karosseriewand (17) abgewandten Ende des Pedalbocks (4) weitere Befestigungsmittel (13) für dessen Verbinden mit einem weiteren stationären Karosseriebauteil (14) vorgesehen sind, **dadurch gekennzeichnet, daß** die Lagerstellen für die Schwenkachse (7) durch kulissenartige Führungen (11) gebildet sind, in denen die Schwenkachse (7) mittels eines Halteteiles (12) gehalten wird, dessen Verschieben durch die Einwirkung einer bei einem Aufprallunfall entstehenden Kraft die Schwenkachse (7) freigibt.

2. Bremspedalwerk nach Anspruch 1 **dadurch gekennzeichnet, daß** das Halteteil (12) gegenüber dem Pedalbock (5) relativ steif ausgebildet ist.

3. Bremspedalwerk nach Anspruch 2 **dadurch gekennzeichnet, daß** das Halteteil (12) als ein U-Profil ausgebildet ist.

4. Bremspedalwerk nach einem der Ansprüche 1 bis 3 **dadurch gekennzeichnet, daß** das Halteteil (12) mit dem Pedalbock (5) mittels einer kraftschlüssigen Verbindung verbunden ist.

5. Bremspedalwerk nach Anspruch 4 **dadurch gekennzeichnet, daß** das Halteteil (12) mit dem Pedalbock (5) durch Punktschweißen, Hartlöten oder Clinchen verbunden ist.

6. Bremspedalwerk nach Anspruch 5 **dadurch gekennzeichnet, daß** am Pedalbock (5) Laschen (15,16) ausgebildet sind, die der Befestigung des Halteteils (12) dienen.

7. Bremspedalwerk nach Anspruch 6 **dadurch gekennzeichnet, daß** der Pedalbock (5) im Bereich der Laschen (15,16) Sollbruchstellen aufweist.

## Claims

1. Brake pedal assembly for automotive vehicles with a pedal mounting support (4) which is attached to a brake force booster (1) or a body wall (17) of the automotive vehicle and includes two opposed lateral walls (8, 9) which provide points of support for a pivot axle of a pivotally mounted actuating pedal (6), at which an actuating rod (10) of the brake force booster is articulated, wherein at the end of the pedal mounting support (4) remote from the brake force booster (1) or the vehicle body wall (17) further attachment means (13) are provided to connect the pedal mounting support to another stationary vehicle body component part (14),
**characterized in that** the points of support for the pivot axle (7) are provided by coulisse-type guides (11) in which the pivot axle (7) is retained by a securing element (12) which, when moved by the action of a force that is caused in a collision, releases the pivot axle (7).

2. Brake pedal assembly as claimed in claim 1,
**characterized in that** the securing element (12) has a relatively rigid design compared to the pedal mounting support (5).

3. Brake pedal assembly as claimed in claim 2,
**characterized in that** the securing element (12) has the configuration of a U-profile.

4. Brake pedal assembly as claimed in any one of claims 1 to 3,
**characterized in that** the securing element (12) is connected to the pedal mounting support (5) by way of operative engagement.

5. Brake pedal assembly as claimed in claim 4,
**characterized in that** the securing element (12) is connected to the pedal mounting support (5) by spot-welding, hard-soldering or clinching.

6. Brake pedal assembly as claimed in claim 5,
**characterized in that** the pedal mounting support (5) includes lugs (15, 16) which are used to fasten the securing element (12).

7. Brake pedal assembly as claimed in claim 6,
**characterized in that** the pedal mounting support (5) has preset breaking points in the area of the lugs (15, 16).

## Revendications

1. Mécanisme de pédale de frein, pour véhicule automobile, comprenant un support de pédale en forme de portique (4) qui peut être fixé à un amplificateur de force de freinage (1) ou à une cloison de carrosserie (17) du véhicule automobile et qui comporte deux parois latérales (8, 9) opposées qui forment des emplacements de palier pour un axe de basculement d'une pédale d'actionnement (6) montée rotative sur laquelle une tige d'actionnement (10) de l'amplificateur de force de freinage est articulée, tandis que, sur l'extrémité du support de pédale en forme de portique (4) située à l'opposé de l'amplificateur de force de freinage (1) ou de la paroi de carrosserie (17), il est prévu d'autres moyens de fixation (13) pour relier ce support de pédale à une autre partie structurelle de carrosserie (14) fixe, **caractérisé en ce que** les emplacements de palier prévus pour l'axe de basculement (7) sont formés par des guidages (11) en forme de glissière dans lesquels l'axe de basculement (7) est maintenu au moyen d'une pièce de maintien (12) dont un déplacement sous l'action d'une force se présentant lors d'un accident par collision libère l'axe de basculement (7).

2. Mécanisme de pédale de frein suivant la revendication 1, **caractérisé en ce que** la pièce de maintien (12) est réalisée relativement rigide en comparaison du support de pédale en forme de portique (5).

3. Mécanisme de pédale de frein suivant la revendication 2, **caractérisé en ce que** la pièce de maintien (12) est réalisée sous forme d'un profilé en U.

4. Mécanisme de pédale de frein suivant l'une des revendications 1 à 3, **caractérisé en ce que** la pièce de maintien (12) est reliée au support de pédale en forme de portique (5) au moyen d'une liaison par application de force.

5. Mécanisme de pédale de frein suivant la revendication 4, **caractérisé en ce que** la pièce de maintien (12) est reliée au support de pédale en forme de portique (5) par soudage par points, brasage dur ou rabattement.

6. Mécanisme de pédale de frein suivant la revendication 5, **caractérisé en ce que** des pattes de fixation (15, 16) qui servent à la fixation de la pièce de maintien (12) sont réalisées sur le support de pédale en forme de portique (5).

7. Mécanisme de pédale de frein suivant la revendication 6, **caractérisé en ce que** le support de pédale en forme de portique (5) comporte des emplacements de rupture imposée dans la zone des pattes de fixation (15, 16).
